# EUROPEAN PATENT SPECIFICATION

(11) **EP 3 082 555 B1**
(45) Date of publication and mention of the grant of the patent: **13.12.2017**
(21) Application number: 13814904.2
(22) Date of filing: 19.12.2013
(51) Int. Cl.: A47L 15/42, A47L 15/48

(54) **DISHWASHER COMPRISING HEAT PUMP SYSTEM**
GESCHIRRSPÜLMASCHINE MIT EINEM WÄRMEPUMPENSYSTEM
LAVE-VAISSELLE COMPRENANT UN SYSTÈME DE POMPE À CHALEUR

(43) Date of publication of application: 26.10.2016
(73) Proprietor: Electrolux Appliances Aktiebolag, 105 45 Stockholm (SE)
(72) Inventor: DREOSSI, Giuseppe, S-10545 Stockholm (SE); JONSSON, Stefan, S-10545 Stockholm (SE); KRISCHE, Bernd, S-13239 Saltsjö-Boo (SE); MINDE, Marie, S-10545 Stockholm (SE)
(74) Representative: Electrolux Group Patents
(86) International application number: PCT/EP2013/077395
(87) International publication number: WO 2015/090408

(56) References cited:
- EP-A1- 2 471 434
- EP-A1- 2 662 013
- EP-A2- 2 206 824
- EP-A2- 2 322 072
- CH-A2- 699 692

## Description

### Field of the invention

The present invention relates to dishwasher comprising a heat pump system for use during the dishing and drying phase.

### Background of the invention

Dishwashers are used in domestic kitchens as well as professional kitchens and restaurants for dishing goods such as for example plates, pots, pans etc. Dishwashers comprises a washing chamber in which the dishing goods are packed in one or more baskets to remain in the intended position separated from adjacent items to make it possible for water to circulate within the washing chamber and clean the dishing goods.

Water is circulated in the washing chamber by a pump arranged in the lower section of the washing chamber. The water is lead from the pump via pipes to one, or more, rotating spray arms provided with a number nozzles that are spraying water on the dishing goods to clean the dishing goods.

In order to reduce the energy consumption and adapt the dishwashers to new regulations regarding energy consumption some modern dishwashers have been provided with a heat pump system. The heat pump system reduces the power consumption required to heat the dishing water. The working principle of heat pump systems are widely known and used within several different technical fields to heat different mediums alternatively used the other way around for refrigerators etc. One example of a dishwasher provided with a heat pump system is disclosed in EP 2 471 434.

In a basic heat pump system a working medium is circulated in the system comprising a compressor, a condenser and an evaporator connected with suitable pipes. After having passed the compressor, the working medium is lead to the condenser where heat is transferred to the dishing bath before the working medium continues to the evaporator where some kind of phase changing material (i.e. water) is cooled down. The advantage with the heat pump system is that the energy required to run the compressor is lower than the energy transferred to the water by the condenser, and as a consequence the phase changing material on the evaporator side becomes cold, and possibly solid.

EP 2206824 A2 discloses a dishwasher comprising a heat pump and a tank.

However, after the dishing program is completed the cooled phase changing material cooled by the evaporator has a very low temperature, depending on the characteristics of the working medium possibly solid, which makes it impossible to start a new dishing program until the temperature of the working medium has reached a more normal temperature which is essential to ensure that the heat pump cycle work as intended.

There is consequently a need for an improved dishwasher heat pump arrangement that doesn't suffer from the described drawback and makes it possible to start a new dishing program shortly after one dishing program has been completed.

### Summary of the invention

The present invention, defined in the appended claims, relates to a dishwasher that to at least some extent fulfils the need defined above.

The dishwasher according to the invention comprises:
the features of independent claim 1.

Preferred embodiments of the invention are claimed in dependent claims 2 to 6.

The dishwasher defined above provides a dishwasher with a heat pump system comprising an additional condenser which during the drying phase is arranged to heat the cooled medium to return the medium to a temperature at least close to room temperature. The temperature of the medium is essential for the efficiency of the heat pump system and the possibility to provide the desired effective heating of the dishing water and the heat transferred by the second condenser to the medium shortens the time to the start of a new dishing program considerably. In one embodiment of the dishwasher, the heat pump system furthermore comprises a second evaporator and the dishwasher comprises a passage and a fan arranged in the passage to, during the second phase, generate a flow of humid air from the washing chamber past the second evaporator arranged to condensate water in the humid air to dehumidify the air. This embodiment improves the efficiency of the arrangement further since the low temperature in the second evaporator, alternatively a surface cooled by the second evaporator, is used for condensating water from the humid air in the washing chamber before the dehumidified air is returned to the washing chamber which shortens the time required to dry the dishing goods in the washing chamber. According to the invention the dishwasher the heat pump system comprises a first valve and a second valve arranged to switch the arrangement between the first and second configuration, said first valve is arranged to direct the working medium from the compressor to either the first or the second condenser and the second valve is arranged direct the working medium either from the first or the second evaporator back to the compressor This embodiment provides a reliable and easy switch between the two configurations which is favourable to keep the overall time required for the dishwasher program as short as possible.

In one embodiment of the dishwasher, the second condenser furthermore is arranged to heat the dehumidified air in the passage to further improve the drying of the dishing goods. After the dehumidifying of the air the temperature of the air has dropped considerably and the heat delivered by the second condenser improves the drying phase considerably. According to the invetion the dishwasher furthermore comprises a vessel in which the cooled working medium is stored, and said second condenser is arranged in contact with the vessel, or at least partly embedded in the vessel, to heat the cooled working medium. This embodiment provides efficient heat transfer between the second condenser and the cooled working medium contained in the vessel which is essential to ensure the desired heating of the working medium and make is possible to start the dishwasher once again.

In one embodiment of the dishwasher, the working medium is a phase changing medium which ensures an efficient heat transfer between the first evaporator and the second condenser.

In one embodiment of the dishwasher, the first condenser is arranged to heat water located in a tub arranged in the lower part of the washing chamber. This is one arrangement for heating the dishing water in a reliable way without requiring several additional components that have to be fitted in the dishwasher.

One embodiment of the dishwasher comprises a water tank arranged separately from the washing chamber, said first condenser is arranged adjacent to or embedded in the tank to heat the water in the tank. The separate water tank makes it possible to preheat the water before the circulation of water in the dishwasher is initiated which facilitates the heating of the water

The different embodiment described above could of course be combined and modified in different ways without departing from the scope of the invention that will be described more in detail in the detailed description.

### Brief description of the drawings

The heat pump arrangement according to the invention is schematically illustrated in the appended figures. The figures illustrate:
Figure 1 illustrates schematically an example of a prior art heat pump system.
Figure 2 discloses a first embodiment of a dishwasher comprising a heat pump system according to the invention schematically.
Figure 3 discloses a second embodiment of a dishwasher comprising a heat pump system according to the invention schematically

### Detailed description

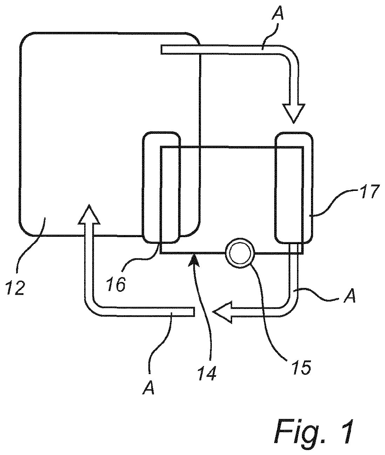

In figure 1, a known heating system for use in dishwasher is illustrated schematically. Figure 1 discloses a washing chamber 12 intended to be arranged in a dishwasher and a basic heat pump system 14 comprising a compressor 15, a condenser 16 and an evaporator 17 connected with suitable pipes to form the closed heat pump system in which a working medium is circulated.

After having passed the compressor 15, the working medium is lead to the condenser 16 where heat is transferred from the working medium to the dishing water in for example a heat exchanger, not illustrated, to be heated to the desired temperature to obtain a good dishing result. The working medium continues from the condenser 16 to the evaporator 17 where some kind of medium is cooled down, possibly to a solid state.

After the dishing phase of the dishing program is completed, the air in the washing chamber 12 is hot and containing a high amount of water steam. In order to be able dry the dishing goods in the washing chamber the amount of water steam in the air must be reduced. This is achieved by leading air, indicated with arrows A in figure 1, from the washing chamber 12 past the evaporator arranged outside the washing chamber 12 thereby condensating the water steam in the air and return the dried air to the washing chamber. However, the temperature of air is after the passing of the evaporator reduced considerably and affecting the drying in a negative way. If the drying phase is long, the temperature will be reduced further increasing the problem even more.

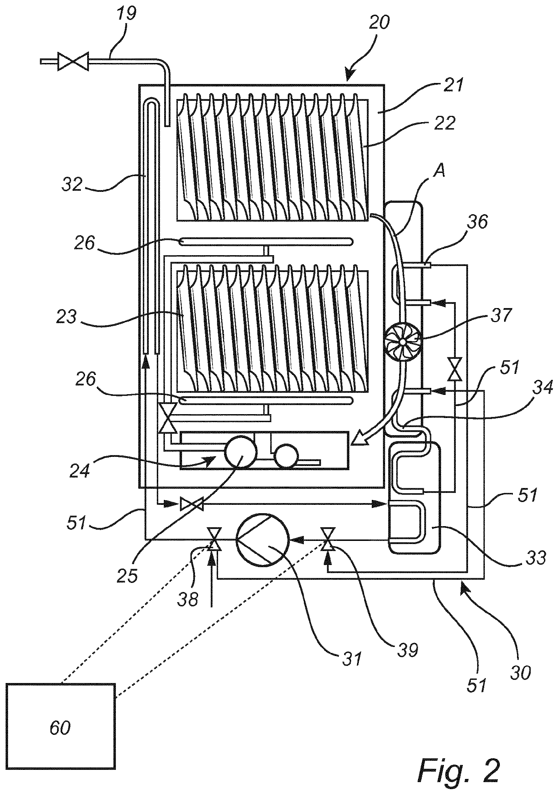

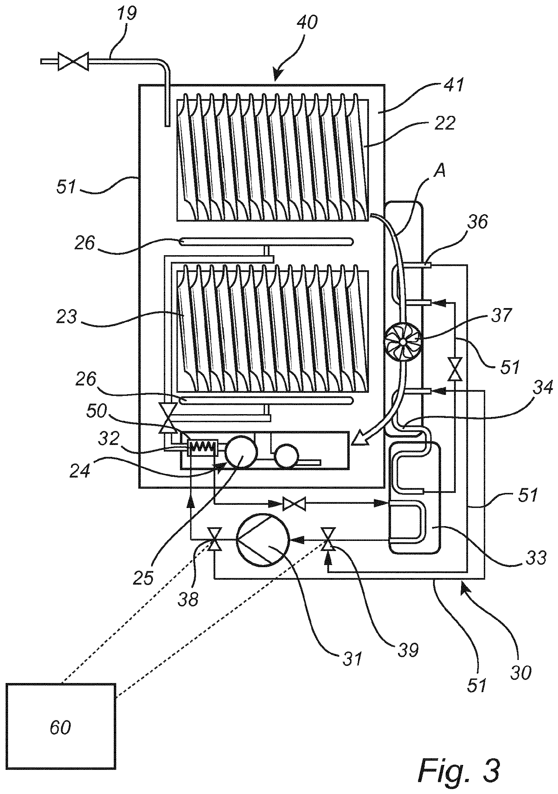

Figure 2 and 3 schematically illustrates two embodiments of dishwashers 20, 40 according to the invention schematically. The dishwasher 20, 40 comprises a washing chamber 21, 41 surrounded by a substantially rectangular cabinet, not illustrated in the figures. An opening is arranged in the front side of the dishwasher to make the washing chamber accessible from the outside. The opening is closed by a door.

Within the washing chamber 21, 41 an upper 22 and lower basket 23 for dishing goods are arranged at different heights. The baskets are extractably arranged in the washing chamber and formed of thin elements like for example wires or rods in order to provide a basket structure that the water could flow through easily. However, smaller dishwashers have only one basket and larger dishwashers could have three baskets.

Once the dishwasher is filled with dishing goods, the dishwasher is started. Dishwashers are provided with a number of different dishing programs adapted for different types of dishing goods etc. Most of the programs are started with a dishing phase followed by a drying phase and when the selected program is started heated water, in combination with detergent, is circulated in the washing chamber by a water circulating system 24 comprising at least a water pump 25 connected to at least one rotating spray arm 26 arranged in the washing chamber to spray water on the dishing goods in the baskets.

In order to achieve a satisfying dishing and drying result in combination with a low power consumption the dishwasher comprises a heat pump system 30 arranged to heat the cold water supplied to the dishwasher from an external provider in a pipe 19, and deliver heat to the dishwasher also during the drying phase.

The heat pump system 30, 50 according to the invention is therefore switchable between a first configuration used during the dishing phase, and a second configuration used during the drying phase of the dishwasher operation program. Within the heat pump system 30, a working medium is circulated between the different components of the system in pipes suitable for the selected working medium of the heat pump system.

In the first configuration a compressor 31, arranged somewhere in the dishwasher, is connected to a first condenser 32, arranged to heat the dishing water, and a first evaporator 33 arranged to cool a medium arranged in a vessel outside the washing chamber adjacent to the first evaporator 33. The first condenser 32 is arranged adjacent to the lower part of the washing chamber, alternatively arranged along the pipe 19 supplying water to the dishwasher, to transfer heat from the working medium to the washing bath before the water is lead by the pump 25 to the spray arms 26 and sprayed over the dishing goods.

An alternative embodiment of the dishwasher is illustrated in figure 3. In this embodiment the dishwasher comprises a water tank 50 arranged separately from the washing chamber 41. The first condenser 32 is in this embodiment arranged adjacent to, or embedded in the tank 50, to be able to heat the water in the tank 50. This embodiment of the dishwasher makes it possible to preheat the water before the circulation of water in the dishwasher is initiated which facilitates the heating of the water.

The working medium, now at a considerably lower temperature, continues from the first condenser 32 to the first evaporator 33 where the working medium cools the medium in the vessel before the working medium returns to the compressor 31 and the heat pump cycle is repeted until the dishing phase is ended.

After the dishing phase of the dishing program is ended, the medium in the vessel has been cooled considerably, possibly to a solid state, which makes it impossible to start further dishing programs until the temperature of the phase changing medium has reach a higher temperature, i.e. turned into a liquid state.

When the heat pump system is arranged in the second configuration, i.e. the drying phase, the compressor 31 is connected to a second condenser 34 arranged to transfer heat from the working medium to the cooled medium in the vessel and heat the cooled medium and thereby shorten the time required before the dishwasher is ready to be started once again.

To complete the heat pump cycle in the second configuration the second condenser 34 is connected to a second evaporator 36. The second evaporator 36 is arranged to dehumidify the air in the washing chamber that after the completion of the dishing phase contains a high amount of humidity. This is achieve by letting the humid air from the washing chamber 21, 41 pass the second evaporator 36, alternatively a surface cooled by the second evaporator, and thereby condensating the steam in the air to water that is led down into the sump in the lower part of the washing chamber.

In order to ensure an efficient dehumidifying of the air, the dishwasher preferably comprises a passage, not illustrated, extending outside the washing chamber within the dishwasher cabinet such that air is circulated through the passage and returned to the washing chamber. A fan 37 is arranged in the passage to generate a flow of air A by sucking air into the passage from the washing chamber and leading the air past the second evaporator arranged 36 in the passage, alternatively a surface cooled by the second evaporator 36 and arranged in the passage, so that steam from the air is condensated to water and the remaining air dehumidified before it is returned to the washing chamber.

The second evaporator 36, or the surface cooled by the second evaporator 36, however also cools the air which will affect the drying in a negative way and in order to ensure a higher temperature in the air that is returned to the washing chamber 21, 41 the second condenser 34 is arranged adjacent to the passage, alternatively in the passage to exchange heat from the working medium to the dehumidified air flowing through the passage before it is enters the washing chamber.

The heat delivered by the second condenser 34 is consequently divided between the medium in the vessel and the dehumidified air. The amount of heat delivered to the medium and the dehumidified air could be adapted to the specific needs.

The heat pump system is switched between the first and second configuration by a first 38 and a second valve 39 arranged to direct the flow of the working medium within the heat pump system to respective heat pump configuration. The first valve 38 is arranged to direct the working medium from the compressor 31 to the first 32 or the second condenser, 34 and the second valve 39 is arranged to direct the working medium either from the first 33 or second evaporator 36 back to the compressor 31. Furthermore the first condenser 32 is connected to the first evaporator, and the second condenser 34 connected to the second evaporator 36, the valves 38, 39 are operated by a dishwasher control unit that is also running the operation of the dishwasher program based on the operator's selection.

The embodiments described above could be combined and modified in different ways without departing from the scope of the invention that is defined by the appended claims.

## Claims

1. Dishwasher (20; 40) comprising:
a washing chamber (21; 41) in which dishing goods are packed in one or more baskets (22, 23);
a water circulation system (24); and
a heat pump system (30) comprising a compressor (31), a first condenser (32), a second condenser (34) and a first evaporator (33); wherein
the heat pump system (30) is switchable between a first configuration used during a dishing phase and in which the compressor (31) is connected to the first condenser (32) arranged to heat the dishing water and the first evaporator (33) arranged to cool a medium, and a second configuration used during a drying phase and in which the compressor (31) is connected to the second condenser (34) arranged to heat the cooled medium to prepare the dishwasher for the next dishing phase,
wherein the compressor (31), the first condenser (32), the second condenser (34) and the first evaporator (33) of the heat pump system (30) are connected by pipes (51) suitable for a working medium circulating in the heat pump system,
wherein the heat pump system (30) comprises a first valve (38) and a second valve (39) arranged to switch the arrangement between the first and second configuration,
which valves (38,39) are operated by a dishwasher control unit that is also running the operation of a dishwasher program based on an operator's selection, and
which dishwasher (20; 40) furthermore comprises a vessel in which the cooled medium is stored, and said second condenser (34) is arranged in contact with the vessel, or at least partly embedded in the vessel, to heat the cooled medium.

2. Dishwasher (20; 40) according to claim 1, wherein the heat pump system (30) furthermore comprises a second evaporator (36) and the dishwasher comprises a passage and a fan (37) arranged in the passage to, during the second phase, generate a flow of humid air from the washing chamber past the second evaporator (36) arranged to condensate water in the humid air to dehumidify the air.

3. Dishwasher (20; 40) according to claim 2, wherein said first valve (38) is arranged to direct the working medium from the compressor (31) to either the first (32) or the second condenser (34) and the second valve (39) is arranged direct the working medium either from the first (33) or the second evaporator (36) back to the compressor (31).

4. Dishwasher (20; 40) according to claim 3, wherein the second condenser (34), furthermore is arranged to heat the dehumidified air in the passage.

5. Dishwasher (20) according to claim 1, wherein the first condenser (32) is arranged to heat water located in a tub arranged in the lower part of the washing chamber (21).

6. Dishwasher (40) according to claim 1, further comprising a water tank (50) arranged separately from the washing chamber (41), said first condenser (32) is arranged adjacent to or embedded in the tank (50) to heat the water in the tank (50).

## Patentansprüche

1. Geschirrspülmaschine (20; 40), umfassend:
eine Spülkammer (21; 41), in welcher Spülgut in einen oder mehrere Körbe (22, 23) gepackt ist;
ein Wasserzirkulationssystem (24); und
ein Wärmepumpensystem (30), umfassend einen Kompressor (31), einen ersten Kondensator (32), einen zweiten Kondensator (34) und einen ersten Verdampfer (33); wobei
das Wärmepumpensystem (30) zwischen einer ersten Konfiguration, die während einer Spülphase genutzt wird und in welcher der Kompressor (31) mit dem ersten Kondensator (32), der angeordnet ist, das Spülwasser zu erhitzen, und dem ersten Verdampfer (33) verbunden ist, der angeordnet ist, ein Medium zu kühlen, und einer zweiten Konfiguration umschaltbar ist, die während einer Trocknungsphase genutzt wird und in welcher der Kompressor (31) mit dem zweiten Kondensator (34) verbunden ist, der angeordnet ist, das gekühlte Medium zu erhitzen, um die Geschirrspülmaschine für die nächste Spülphase vorzubereiten,
wobei der Kompressor (31), der erste Kondensator (32), der zweite Kondensator (34) und der erste Verdampfer (33) des Wärmepumpensystems (30) durch Rohre (51) verbunden sind, die für ein Arbeitsmedium, das in dem Wärmepumpensystem zirkuliert, geeignet sind,
wobei das Wärmepumpensystem (30) ein erstes Ventil (38) und ein zweites Ventil (39) umfasst, die angeordnet sind, um die Anordnung zwischen der ersten und der zweiten Konfiguration umzuschalten, wobei die Ventile (38, 39) von einer Geschirrspülmaschinen-Regeleinheit betrieben werden, die ebenfalls den Vorgang eines Geschirrspülmaschinen-Programms anhand der Auswahl eines Bedieners ausführt, und wobei die Geschirrspülmaschine (20; 40) ferner einen Behälter umfasst, in welchem das gekühlte Medium gespeichert ist, und der zweite Kondensator (34) in Kontakt mit dem Behälter angeordnet oder zumindest teilweise in den Behälter eingebettet ist, um das gekühlte Medium zu erhitzen.

2. Geschirrspülmaschine (20; 40) nach Anspruch 1, wobei das Wärmepumpensystem (30) ferner einen zweiten Verdampfer (36) und die Geschirrspülmaschine einen Durchgang und ein Gebläse (37) umfasst, das in dem Durchgang angeordnet ist, um während der zweiten Phase einen Fluss feuchter Luft von der Spülkammer hinter den zweiten Verdampfer (36) zu erzeugen, der zum Kondensieren von Wasser in der feuchten Luft zum Entfeuchten der Luft angeordnet ist.

3. Geschirrspülmaschine (20; 40) nach Anspruch 2, wobei das erste Ventil (38) angeordnet ist, das Arbeitsmedium von dem Kompressor (31) zu entweder dem ersten (32) oder dem zweiten Verdampfer (34) zu leiten, und das zweite Ventil (39) angeordnet ist, das Arbeitsmedium entweder von dem ersten (33) oder dem zweiten Verdampfer (36) zurück zu dem Kompressor (31) zu leiten.

4. Geschirrspülmaschine (20; 40) nach Anspruch 3, wobei der zweite Kondensator (34) ferner angeordnet ist, die entfeuchtete Luft in dem Durchgang zu erhitzen.

5. Geschirrspülmaschine (20) nach Anspruch 1, wobei der erste Kondensator (32) angeordnet ist, Wasser, das sich in einer Wanne befindet, die in dem unteren Teil der Spülkammer (21) angeordnet ist, zu erhitzen.

6. Geschirrspülmaschine (40) nach Anspruch 1, ferner umfassend einen Wassertank (50), der getrennt von der Spülkammer (41) angeordnet ist, wobei der erste Kondensator (32) angrenzend an den Tank (50) angeordnet oder darin eingebettet ist, um das Wasser in dem Tank (50) zu erhitzen.

## Revendications

1. Lave-vaisselle (20 ; 40), comprenant :
une chambre de lavage (21 ; 41) dans laquelle des articles de vaisselle sont chargés dans un ou plusieurs paniers (22, 23) ;
un système de circulation d'eau (24) ; et
un système de pompe à chaleur (30) comprenant un compresseur (31), un premier condenseur (32), un second condenseur (34) et un premier évaporateur (33) ; dans lequel
le système de pompe à chaleur (30) est commutable entre une première configuration utilisée durant une phase de vaisselle et dans laquelle le compresseur (31) est raccordé au premier condenseur (32) agencé pour chauffer l'eau de vaisselle et au premier évaporateur (33) agencé pour refroidir un fluide, et
une seconde configuration utilisée durant une phase de séchage et dans laquelle le compresseur (31) est raccordé au second condenseur (34) agencé pour chauffer le fluide refroidi pour préparer le lave-vaisselle pour la phase de vaisselle suivante,
dans lequel le compresseur (31), le premier condenseur (32), le second condenseur (34) et le premier évaporateur (33) du système de pompe à chaleur (30) sont raccordés par des tuyaux (51) appropriés pour un fluide moteur circulant dans le système de pompe à chaleur,
dans lequel le système de pompe à chaleur (30) comprend un premier clapet (38) et un second clapet (39) agencé pour commuter l'agencement entre la première et la seconde configuration,
lesquels clapets (38, 39) sont mis en fonctionnement par une unité de commande de lave-vaisselle qui est exécute également le fonctionnement d'un programme de lave-vaisselle en fonction d'une sélection par un opérateur, et
lequel lave-vaisselle (20 ; 40) comprend en outre un récipient dans lequel le fluide refroidi est stocké, et ledit second condenseur (34) est agencé en contact avec le récipient, ou au moins partiellement incorporé dans le récipient, pour chauffer le fluide refroidi.

2. Lave-vaisselle (20 ; 40) selon la revendication 1, dans lequel le système de pompe à chaleur (30) comprend en outre un second évaporateur (36) et le lave-vaisselle comprend un passage et un ventilateur (37) agencé dans le passage pour, durant la seconde phase, produire un écoulement d'air humide, à partir de la chambre de lavage, qui passe devant le second évaporateur (36) agencé pour condenser de l'eau dans l'air humide pour déshumidifier l'air.

3. Lave-vaisselle (20 ; 40) selon la revendication 2, dans lequel ledit premier clapet (38) est agencé pour diriger le fluide moteur à partir du compresseur (31) vers le premier (32) ou le second condenseur (34) et le second clapet (39) est agencé pour rediriger le fluide moteur à partir du premier (33) ou du second évaporateur (36) vers le compresseur (31).

4. Lave-vaisselle (20 ; 40) selon la revendication 3, dans lequel le second condenseur (34) est en outre agencé pour chauffer l'air déshumidifié dans le passage.

5. Lave-vaisselle (20) selon la revendication 1, dans lequel le premier condenseur (32) est agencé pour chauffer de l'eau située dans une cuve agencée dans la partie inférieure de la chambre de lavage (21).

6. Lave-vaisselle (40) selon la revendication 1, comprenant en outre un réservoir d'eau (50) agencé séparément de la chambre de lavage (41), ledit premier condenseur (32) est agencé de façon adjacente au, ou incorporé dans le, réservoir (50) pour chauffer l'eau dans le réservoir (50).
